# EUROPÄISCHE PATENTSCHRIFT

(11) **EP 2 154 043 B1**
(45) Veröffentlichungstag und Bekanntmachung des Hinweises auf die Patenterteilung: **14.03.2012**
(21) Anmeldenummer: 09162772.9
(22) Anmeldetag: 16.06.2009
(51) Int. Cl.: B60W 30/14

(54) **Geschwindigkeits- und Abstandsregler mit Beeinflussung durch Informationen des Navigationssystems**
Speed or distance controller (ACC) using information of the Navigation System
Régulateur de distance ou de vitesse pour véhicules en utilisant des informations du système de navigation

(30) Priorität: 12.08.2008 DE 102008041174
(43) Veröffentlichungstag der Anmeldung: 17.02.2010
(73) Patentinhaber: Robert Bosch GmbH, 70442 Stuttgart (DE)
(72) Erfinder: Otto, Stephan, 70806 Kornwestheim (DE)

(56) Entgegenhaltungen:
- EP-A- 1 318 042
- WO-A-2006/131421
- DE-A1-102006 022 080

## Beschreibung

Die Erfindung betrifft ein Verfahren zur Beeinflussung der Geschwindigkeit oder des Abstandes eines Fahrzeuges zu einem anderen Fahrzeug gemäß Patentanspruch 1. Weiterhin betrifft die Erfindung eine Vorrichtung zur Beeinflussung der Geschwindigkeit eines Fahrzeuges oder eines Abstandes eines Fahrzeuges zu einem anderen Fahrzeug gemäß Patentanspruch 10.

### Stand der Technik

Im Stand der Technik sind Verfahren zur automatischen Regelung der Geschwindigkeit eines Fahrzeuges und des Abstandes eines Fahrzeuges zu einem vorausfahrenden Fahrzeug bekannt. Bei diesem Verfahren wird eine vorgegebene Geschwindigkeit eingehalten, soweit es der Abstand zu einem vorausfahrenden Fahrzeug erlaubt. Zudem wird ein vorgegebener Mindestabstand zu dem vorausfahrenden Fahrzeug eingehalten. Zur Einhaltung der Geschwindigkeit und/oder des Abstandes wird das Fahrzeug automatisch beschleunigt oder abgebremst.

Aus DE 10324961 A1 ist ein System und ein Verfahren zum Berechnen und/oder zum Ermitteln von Routen bekannt. Dabei wird eine Fahrroute in Abhängigkeit von einem Parameter eines Routenabschnittes berechnet. Der Parameter kann ein zeitabhängiges Ereignis, z. B. ein sich auf der Route befindlich zeitabhängiges Hindernis, wie etwa einen überbreiten Schwertransporter oder eine zeitabhängige Verkehrsregeleinheit, wie etwa eine Ampelanlage, beinhalten.

Aus WO 91/14154 ist ein Navigationssystem bekannt. Das Navigationssystem berücksichtigt bei der Bestimmung einer Route von einem Standort zu einem Zielort die durch eine Verkehrsnachricht gekennzeichnete Belastung der Strecke. Dadurch wird eine aktuelle verkehrsabhängige Navigation möglich.

Aus WO 2006/131421 A ist ein adaptiver Geschwindigkeitsregler mit situationsabhängiger Dynamikanpassung bekannt. Dabei werden Beschleunigungsprofile abhängig von einer Information des Navigationssystems angepasst. Zudem werden Soll-Abstände zu vorausfahrenden Fahrzeugen abhängig von Informationen des Navigationssystems angepasst. Wahlweise kann ein zusätzlicher Parameter des Dynamikprofils eine vorübergehende Erhöhung der vom Fahrer gewählten Wunschgeschwindigkeit bestimmen. So kann etwa bei hoher Verkehrsdichte bei einem Überholvorgang bestimmt werden, dass die Wunschgeschwindigkeit vorübergehend auf einen Wert erhöht wird, der beispielsweise 5 km/h über der Absolutgeschwindigkeit des überholten Fahrzeugs liegt, damit der Überholvorgang abgekürzt wird.

Aus DE 10 2006 022 080 A1 ist ein Verfahren zur Steuerung und/oder Regelung der Geschwindigkeit eines Kraftfahrzeugs bekannt. Dabei wird eine Sollgeschwindigkeit des Kraftfahrzeugs in Abhängigkeit von Eigenschaften von vorausliegenden Straßenabschnitten eingestellt. Die Eigenschaften der Straßenabschnitte können wenigstens eine der folgenden Größen umfassen: Straßenverlauf, Beschaffenheit der Fahrbahnoberfläche oder vorhandene Verkehrsschilder. Anhand dieser erfassten Größen wird eine angepasste Geschwindigkeit ermittelt.

### Offenbarung der Erfindung

Die Aufgabe der Erfindung besteht darin, ein verbessertes Verfahren und eine verbesserte Vorrichtung zur automatischen Geschwindigkeitsregelung bereitzustellen.

Die Aufgabe der Erfindung wird durch das Verfahren gemäß Patentanspruch 1 und die Vorrichtung gemäß Patentanspruch 10 gelöst.

Ein Vorteil des beschriebenen Verfahrens und ein Vorteil der beschriebenen Vorrichtung besteht darin, die Geschwindigkeitsregelung dadurch zu verbessern, dass eine Information über eine Verkehrslage auf einer geplanten Fahrroute berücksichtigt wird. Beispielsweise kann dadurch eine angenehmere Fahrsituation für den Fahrer eines Fahrzeuges ermöglicht werden. Erfindungsgemäß wird eine Sollgeschwindigkeit vorgegeben, wobei die Sollgeschwindigkeit abhängig von der Information des Navigationssystems über die Verkehrslage auf der geplanten Fahrroute reduziert wird. Zudem kann dadurch beispielsweise eine Optimierung des Kraftstoffverbrauches erreicht werden. Weiterhin kann die Unfallgefahr durch eine an die Information über die Fahrroute angepasste Geschwindigkeit oder angepassten Abstand reduziert werden.

Weitere vorteilhafte Ausführungsformen der Erfindung sind in den abhängigen Ansprüchen angegeben.

In einer weiteren Ausführungsform wird als Information eine Verkehrsdichte, insbesondere ein Verkehrsstau, berücksichtigt. Dadurch kann die Geschwindigkeit rechtzeitig reduziert werden. Somit kann einer Unfallgefahr entgegengewirkt werden. Weiterhin kann auf diese Weise Kraftstoff aufgrund der reduzierten Geschwindigkeit eingespart werden. Weiterhin kann als Information eine Baustelle oder eine Wetterlage berücksichtigt werden. Als Wetterlage sind insbesondere Schneefall, Nebel, Regen oder Glatteis für den Fahrer eines Fahrzeuges interessant. Liegt auf einer berechneten Fahrroute beispielsweise ein Abschnitt mit Glatteis oder Schneefall oder Nebel, so kann rechtzeitig die Geschwindigkeit des Fahrzeugs reduziert . Dadurch wird die Unfallgefahr reduziert.

In einer weiteren Ausführungsform wird eine Veränderung einer Verkehrslage oder einer Wetterlage, insbesondere eine Veränderung einer Staulänge bei der Beeinflussung der Geschwindigkeit des Fahrzeuges berücksichtigt. Auf diese Weise wird eine Anpassung an die sich verändernde Verkehrslage oder Wetterlage erreicht. Somit kann eine optimale Geschwindigkeit abhängig von der zeitlichen Veränderung der Verkehrslage oder Wetterlage angepasst werden. Dadurch wird eine genauere Beeinflussung der Geschwindigkeit.

In einer weiteren Ausführungsform kann die Berücksichtigung der Information des Navigationssystems dem Fahrer angezeigt und beispielsweise über eine Eingabe die Berücksichtigung der Information oder die Ablehnung der Berücksichtigung der Information ermöglicht werden.

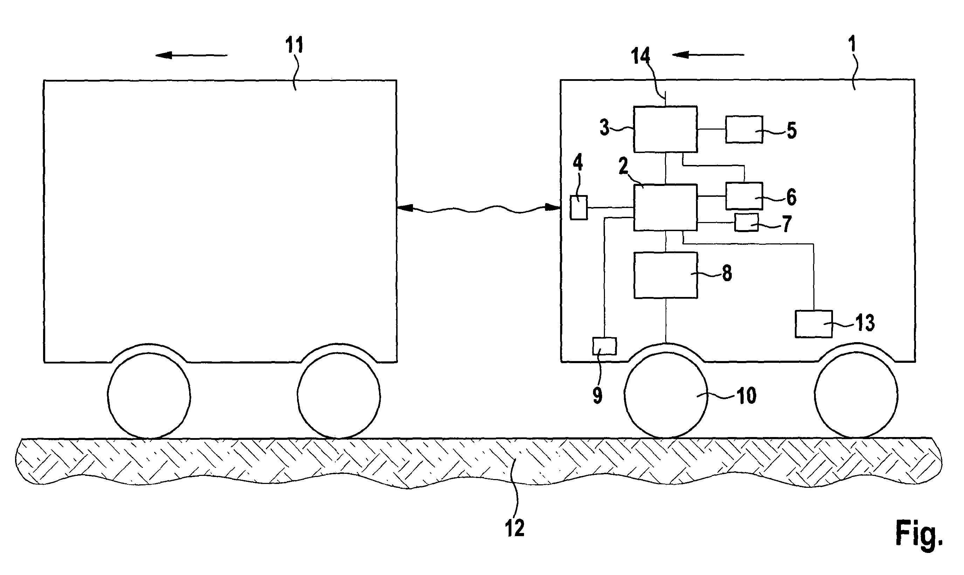

### Kurze Beschreibung der Zeichnung

Die Erfindung wird im Folgenden anhand der Figur näher erläutert. Die einzige Figur zeigt einen schematischen Aufbau einer Vorrichtung zur Beeinflussung der Geschwindigkeit eines Fahrzeuges .

### Ausführungsform(en) der Erfindung

Die Figur zeigt in einer schematischen Darstellung ein zweites Fahrzeug 11, das sich in der von einem Pfeil dargestellten Richtung nach links auf einer Fahrroute 12 bewegt. Dem zweiten Fahrzeug 11 folgt ein erstes Fahrzeug 1 auf der gleichen Fahrroute 12. Das erste Fahrzeug 1 weist Räder 10, eine Steuereinheit 2 auf, die mit einem Navigationsgerät 3, einem Abstandssensor 4, einem Ausgabemittel, insbesondere einer Anzeige 6, einem Geschwindigkeitsmesser 9 und einem Motor 8 und einem Eingabemittel 7 verbunden ist. Das Navigationsgerät 3 steht zudem mit einem Datenspeicher 5 in Verbindung. In der Steuereinheit 2 sind Programme zum Regeln einer Fahrgeschwindigkeit des Fahrzeuges 1.

Weiterhin berechnet das Navigationsgerät 3 eine Fahrroute von einem Startpunkt zu einem Zielpunkt. Bei der Berechnung der Fahrroute werden digitale Straßendaten berücksichtigt, die im Datenspeicher 5 abgelegt sind. Weiterhin verfügt das Navigationsgerät 3 über eine Eingangsschnittstelle 14, über die Informationen, insbesondere über das Straßensystem empfangen werden. Die Eingangsschnittstelle 14 kann in Form eines Anschlusses für ein Radiogerät, in Form einer Antenne oder eines Netzwerkanschlusses ausgebildet sein. Die Informationen können die Verkehrslage, die Wetterlage oder den Zustand des Straßensystems betreffen. Die Verkehrslage kann z. B. die Dichte eines Verkehrsflusses, insbesondere einen Verkehrsstau und die Länge des Verkehrsstaus beinhalten. Die Information kann beispielsweise das Vorhandensein einer Baustelle, eine Verengung einer Straße, den Zustand einer Straße und die Sperrung einer Straße beinhalten. Die Information kann die Wetterlage beispielsweise Schneefall, Regen, Nebel, Glatteis oder Starkregen beinhalten. Die Informationen können entweder direkt von dem Navigationssystem empfangen werden oder nach dem Empfang durch einen Radioempfänger, beispielsweise in Form einer TMC-Meldung (Traffic Message Channel) an das Navigationssystem weitergeleitet werden. Das Navigationssystem ermittelt eine Fahrroute zwischen dem vorgegebenen Startpunkt und dem vorgegebenen Zielpunkt unter Berücksichtigung eines Parameters und unter Berücksichtigung weiterer Informationen über das Straßensystem. Die berechnete Fahrroute wird dem Fahrer über das Ausgabemittel 6 ausgegeben und es werden entsprechende Fahranweisungen zum Folgen der Fahrroute beispielsweise über einen Lautsprecher oder eine Anzeige ausgegeben.

Das Navigationssystem 3 steht mit der Steuereinheit 2 in Verbindung und übermittelt an die Steuereinheit 2 wenigstens eine, insbesondere alle zur Verfügung stehenden Informationen über das Straßensystem und insbesondere über Fahrstrecken der befahrenen Fahrroute.

In der Steuereinheit 2 ist zudem ein Programm zur automatischen Regelung der Geschwindigkeit des Fahrzeuges 1 abgelegt. Dabei kann eine Sollgeschwindigkeit vom Fahrer eingestellt werden. Die Steuereinheit 2 überprüft mit Hilfe des Geschwindigkeitsmessers 9 die aktuelle Geschwindigkeit und passt die Geschwindigkeit des Fahrzeuges 1 in der Weise an, dass die gemessene Geschwindigkeit der Sollgeschwindigkeit entspricht. Dabei wird ein Eingriff auf den Motor 8 oder ein Eingriff auf das Bremssystems 13 durchgeführt.

Durch die Verwendung der Information, die durch das Navigationssystem bereitgestellt wird, kann eine optimierte Zielerreichung unter Berücksichtigung der Information bei der Einstellung der Sollgeschwindigkeit erreicht werden. Insbesondere können Beeinträchtigungen oder Gefahren auf der zu fahrenden Route erkannt und berücksichtigt werden.

In einer Weiterbildung übermittelt das Navigationssystem zusätzlich zu der Information auch die Entfernung zwischen der Fahrroute, zu der die Information gehört, und der aktuellen Position des Fahrzeuges. Beispielsweise wird zusätzlich zu der Information, dass ein Verkehrsstau auf der Fahrroute vorliegt, auch die Information übertragen, dass der Verkehrsstau beispielsweise in einer Entfernung von 50 km ist. Somit kann die Recheneinheit die Sollgeschwindigkeit in Abhängigkeit von der Behinderung und der Entfernung der Behinderung einstellen.

Ist beispielsweise auf der geplanten Fahrroute in 50 km Entfernung durch einen Unfall auf der Autobahn eine einseitige Fahrbahnverengung mit leichten Stauungen erzeugt worden, dann macht es in diesem Fall wenig Sinn, mit einer automatischen Geschwindigkeitsregelung einer vom Fahrer vorgegebenen Sollgeschwindigkeit von rund 160 km/h zu fahren und beispielsweise in 20 Minuten im Stau zu stehen. Stattdessen könnte die Geschwindigkeit reduziert werden, beispielsweise auf 100 km/h verringert werden, so dass in 30 Minuten eine dann beispielsweise bereits geräumte Unfallstelle erreicht wird. Zudem kann ein entsprechender Hinweis für den Fahrer ausgegebenen, insbesondere angezeigt werden, dass die Sollgeschwindigkeit aufgrund welcher Information verändert wurde. Durch die reduzierte Geschwindigkeit ist auch der Verbrauch reduziert.

In analoger Weise kann auch bei anderen Informationen und/oder anderen Entfernungen eine vorgegebene Sollgeschwindigkeit angepasst werden. In der Regel wird wohl eine Reduzierung der Sollgeschwindigkeit vorteilhaft sein, um bei kaum verlängerter Reisezeit die Behinderung zu durchfahren. Zudem kann aufgrund der angepassten Geschwindigkeit ein Gefahrenpotential reduziert werden. Beispielsweise kann bei der Information, dass in 2 km voraus Glatteis oder Nebel oder Starkregen vorliegt, bereits rechtzeitig die Sollgeschwindigkeit reduziert werden . Auf diese Weise wird die Gefahr eines Unfalles reduziert.

Weiterhin können aktuelle Meldungen und Informationen des Navigationssystems über eine Entwicklung einer Behinderung, insbesondere einer Entwicklung eines Staus bei der Anpassung der Sollgeschwindigkeit durch die automatische Geschwindigkeitsregelung berücksichtigt werden. Löst sich beispielsweise ein Stau auf, so kann die Sollgeschwindigkeit wieder an die ursprüngliche Sollgeschwindigkeit angepasst werden. Die Anpassung der Sollgeschwindigkeit kann stufenweise oder in einem Schritt erfolgen.

Gleichzeitig mit der Berücksichtigung der Information des Navigationssystems bei der automatischen Geschwindigkeitsregelung kann der Fahrer über eine Eingabe mit Hilfe des Eingabemittels 7 die Berücksichtigung der Information ausschalten oder die Berücksichtigung der Information in der Auswirkung begrenzen oder sogar noch erhöhen. Schlägt beispielsweise die Steuereinheit 2 eine Reduzierung der Geschwindigkeit um 20% vor, so kann der Fahrer über eine entsprechende Eingabe die Reduzierung der Geschwindigkeit prozentual erhöhen oder reduzieren . Somit kann der Fahrer individuell die Berücksichtigung von Informationen des Navigationssystems bei der automatischen Geschwindigkeits- angepasst an sein Fahrempfinden einstellen.

## Patentansprüche

1. Verfahren zur automatischen Beeinflussung der Geschwindigkeit eines Fahrzeuges, wobei eine Information eines Navigationssystems über eine Verkehrslage auf einer geplanten Fahrroute bei der Beeinflussung der Geschwindigkeit berücksichtigt wird, wobei eine Sollgeschwindigkeit vorgegeben wird, **dadurch gekennzeichnet, dass** die Sollgeschwindigkeit aufgrund der berücksichtigten Information des Navigationssystems über die Verkehrslage reduziert wird.

2. Verfahren nach Anspruch 1, wobei eine Information über eine Verkehrsdichte, insbesondere einen Verkehrsstau berücksichtigt wird.

3. Verfahren nach einem der Ansprüche 1 oder 2, wobei eine Information über eine Baustelle berücksichtigt wird.

4. Verfahren nach einem der Ansprüche 1 bis 3, wobei eine Information über eine Wetterlage, insbesondere Schneefall, Regen, Nebel oder Glatteis berücksichtigt wird.

5. Verfahren nach einem der Ansprüche 1 bis 4, wobei als Information eine Veränderung einer Verkehrs- oder Wetterlage, insbesondere eine Veränderung einer Staulänge berücksichtigt wird.

6. Verfahren nach einem der Ansprüche 1 bis 5, wobei ein Sollabstand vorgegeben wird und wobei der Sollabstand aufgrund der berücksichtigten Informationen des Navigationssystems verändert wird.

7. Verfahren nach einem der Ansprüche 1 bis 6, wobei die Berücksichtigung der Information dem Fahrer mitgeteilt wird.

8. Verfahren nach einem der Ansprüche 1 bis 7, wobei die Berücksichtigung der Information über eine Eingabe angepasst oder außer Kraft gesetzt werden kann.

9. Vorrichtung zur Beeinflussung der Geschwindigkeit eines Fahrzeuges (1) mit einer Steuereinheit (2), wobei die Steuereinheit (2) ausgebildet ist, eine Information eines Navigationssystems (3) über eine Verkehrslage auf einer geplanten Fahrroute bei der Beeinflussung der Geschwindigkeit des Fahrzeuges (1) zu berücksichtigen, wobei eine Sollgeschwindigkeit vorgegeben wird, **dadurch gekennzeichnet, dass** die Sollgeschwindigkeit aufgrund der berücksichtigten Information des Navigationssystems über die Verkehrslage reduziert wird.

## Claims

1. Method for automatically influencing the speed of a vehicle, wherein information for a navigation system about a traffic situation and a planned route is considered during the influencing of the speed, wherein a setpoint speed is predefined, **characterized in that** the setpoint speed is reduced on the basis of the considered navigation system information about the traffic situation.

2. Method according to Claim 1, wherein information about traffic density, in particular a traffic jam, is considered.

3. Method according to one of Claims 1 or 2, wherein information about roadworks is considered.

4. Method according to one of Claims 1 to 3, wherein information about a weather situation, in particular snowfall, rain, fog or black ice is considered.

5. Method according to one of Claims 1 to 4, wherein a change in a traffic situation or weather situation, in particular a change in the length of a traffic jam, is considered as information.

6. Method according to one of Claims 1 to 5, wherein a setpoint distance is predefined, and wherein the setpoint distance is changed on the basis of the considered information from the navigation system.

7. Method according to one of Claims 1 to 6, wherein the consideration of the information is communicated to the driver.

8. Method according to one of Claims 1 to 7, wherein the consideration of the information can be adapted or deactivated by means of an input.

9. Device for influencing the speed of a vehicle (1) having a control unit (2), wherein the control unit (2) is designed to consider information from a navigation system (3) about a traffic situation on a planned route during the influencing of the speed of the vehicle (1), wherein a setpoint speed is predefined, **characterized in that** the setpoint speed is reduced on the basis of the considered navigation system information about the traffic situation.

## Revendications

1. Procédé permettant d'influer automatiquement sur la vitesse d'un véhicule, une information d'un système de navigation sur l'état du trafic sur un itinéraire planifié étant prise en compte pour influer sur la vitesse, une vitesse théorique étant prédéfinie, **caractérisé en ce que** la vitesse théorique est réduite en fonction de l'information du système de navigation prise en compte sur l'état du trafic.

2. Procédé selon la revendication 1, une information sur la densité du trafic, notamment sur la présence d'embouteillages, étant prise en compte.

3. Procédé selon l'une quelconque des revendications 1 ou 2, une information sur la présence de travaux étant prise en compte.

4. Procédé selon l'une quelconque des revendications 1 à 3, une information relative à des intempéries étant prise en compte, notamment la présence de neige, de pluie, de brouillard ou de verglas.

5. Procédé selon l'une quelconque des revendications 1 à 4, l'information prise en compte concernant un changement climatique ou un changement relatif à l'état du trafic, notamment un changement relatif à la longueur d'un embouteillage.

6. Procédé selon l'une quelconque des revendications 1 à 5, un écart théorique étant prédéfini et l'écart théorique étant modifié en fonction des informations du système de navigation prises en compte.

7. Procédé selon l'une quelconque des revendications 1 à 6, la prise en compte de l'information étant communiquée au conducteur.

8. Procédé selon l'une quelconque des revendications 1 à 7, la prise en compte de l'information pouvant être ajustée ou ignorée par le biais de la saisie d'une information.

9. Dispositif permettant d'influer sur la vitesse d'un véhicule (1), avec une unité de commande (2), l'unité de commande (2) étant réalisée pour prendre en compte une information d'un système de navigation (3) sur un état du trafic sur un itinéraire planifié pour influer sur la vitesse du véhicule (1), une vitesse théorique étant prédéfinie, **caractérisé en ce que** la vitesse théorique est réduite sur la base de l'information du système de navigation prise en compte sur l'état du trafic.
